# FASCICULE DE BREVET EUROPEEN

(11) **EP 1 459 588 B1**
(45) Date de publication et mention de la délivrance du brevet: **23.02.2011**
(21) Numéro de dépôt: 02803830.5
(22) Date de dépôt: 25.11.2002
(51) Int. Cl.: H04W 4/02, H04W 64/00, H04W 60/00

(54) **Système et procédé de localisation d'un terminal mobile**
System und Verfahren zum finden eines mobilen Endgeräts
System and method for locating a mobile terminal

(30) Priorité: 30.11.2001 FR 0115568
(43) Date de publication de la demande: 22.09.2004
(73) Titulaire: Orange France, 92120 Montrouge (FR)
(72) Inventeur: SAHNOUN, Rym, F-94230 Cachan (FR)
(74) Mandataire: Simon, Viviane
(86) Numéro de dépôt international: PCT/FR2002/004041
(87) Numéro de publication internationale: WO 2003/047295

(56) Documents cités:
- EP-A- 0 790 747
- WO-A-99/26431
- US-A- 6 167 266

## Description

La présente invention concerne un système et un procédé de localisation d'au moins un terminal mobile dans un réseau cellulaire de communication pour des mobiles.

L'invention s'applique plus particulièrement à la détection de la présence d'au moins un terminal mobile dans une zone géographique déterminée.

Actuellement, les systèmes de localisation d'un terminal mobile permettent de déterminer la position dudit terminal mobile dans la zone de couverture d'une borne radio, appelée une cellule. La cellule représente la distance de portée des transmissions radio dans une zone géographique autour de ladite borne radio. Un serveur de localisation lance une demande vers un réseau cellulaire de communication pour des mobiles pour savoir dans quelle cellule se trouve un terminal mobile. La position du terminal mobile est donnée par les coordonnées géographiques correspondant à ladite cellule.

De manière à améliorer la précision sur la position géographique du terminal mobile, des méthodes combinant les informations de localisation provenant de plusieurs cellules voisines peuvent ensuite être utilisées, par exemple une méthode de triangulation de signaux.

Ces systèmes de localisation fonctionnent sur les réseaux cellulaires de communication existants de type GSM (Global System for Mobile communications, soit système global pour les communications avec les mobiles) ou GPRS (General Packet Radio Service, soit service général de radiocommunication en mode paquet) ou UMTS (Universal Mobile Telecommunications System, soit système universel de télécommunications avec les mobiles).

Avec les systèmes actuels de localisation, en premier, il faut connaître l'identification -du terminal pour détecter sa position. Les systèmes actuels ne savent que préciser l'endroit où se trouve un terminal identifié. Puis, pour le positionner par rapport à une zone géographique déterminée, il faut lancer successivement des demandes de localisation dudit terminal mobile identifié de manière à connaître la cellule dans laquelle il se trouve. Enfin, il faut successivement comparer la zone géographique déterminée avec la zone géographique où a été localisé ledit terminal mobile.

Ces systèmes de localisation imposent un suivi régulier des terminaux mobiles pour surveiller leur position respective et pour déterminer ceux qui sont présents ou proches de ladite zone géographique déterminée. Ces systèmes nécessitent, par conséquent, le déclenchement d'un nombre important de demandes de localisation. Ces demandes fréquentes de localisation représentent une charge importante du serveur de localisation et du réseau mobile de communication.

De plus, les équipements implantés dans ces réseaux cellulaires de communication et nécessaires à la localisation sont coûteux.

Enfin, le document WO 99/26431 décrit un procédé de transmission d'un message vers une station mobile. Selon l'invention, se trouvent une unité de service ("service unit 1") et une base de données ("database 2") dans laquelle peut être mémorisé un message, qui est destiné à un abonné particulier. A intervalles réguliers, l'abonné envoie sa localisation, vers l'unité de service par un appel, par exemple en DTMF ou en utilisant un "computer terminal", associé à un message mis en mémoire et correspondant à une zone géographique déterminée. Le procédé ne présente aucun moyen de limiter le nombre de localisations.

Aussi, le problème technique à résoudre par l'objet de la présente invention est de proposer un système et un procédé de localisation d'au moins un terminal mobile par rapport à une zone géographique déterminée, dans un réseau cellulaire de communication pour des mobiles, qui permettrait de remédier aux inconvénients des systèmes existants en identifiant directement les terminaux mobiles présents ou proches de la zone géographique à surveiller et en évitant les demandes répétées de localisation des terminaux mobiles par le serveur de localisation.

La présente invention est définie par l'objet des revendications indépendantes 1 et 7.

Le canal de diffusion de messages radio est actuellement utilisé pour connaître à tout moment la cellule radio dans laquelle la transmission est la meilleure vers un terminal mobile.

L'utilisation, par le système et le procédé faisant l'objet de l'invention dudit canal de diffusion de messages radio, permet d'identifier les terminaux mobiles proches de la zone géographique à surveiller, sans connaître auparavant lesdits terminaux mobiles concernés.

Pour identifier la zone géographique à surveiller, celle-ci est recouverte par au moins une cellule ou au moins une partie d'au moins une cellule de couverture d'une borne radio du réseau cellulaire de communication. La liste ainsi obtenue desdites cellules correspondant à ladite zone géographique est stockée dans le serveur d'accès.

Par rapport aux systèmes actuels de localisation, la recherche est inversée, car les cellules correspondant à la zone géographique déterminée sont connues et le système et le procédé, conforme à l'invention, identifient les terminaux mobiles.

Seuls les terminaux mobiles, qui émettent un message de présence et qui sont situés dans une cellule proche de la zone géographique surveillée, vont être localisés.

Lesdits système et procédé, conformes à l'invention, détectent quel terminal mobile a donné son accord pour recevoir des messages d'informations, liés à une zone géographique. Ces dits messages d'informations sont transmis après la localisation dudit terminal mobile, en fonction de sa présence dans au moins une cellule proche de ladite zone géographique à surveiller.

Selon l'invention, ledit terminal mobile comporte un moyen d'arrêt de l'émission dudit message de présence vers ledit serveur d'accès.

L'utilisateur reste libre de mettre en fonctionnement ou non ladite réception sur le canal de diffusion radio, en fonction de son activité ou bien de l'endroit où il se trouve. Dans le cas où le canal de diffusion radio n'est pas en service, le terminal mobile n'émet pas ledit message de présence vers le serveur de messages diffusés.

Conformément à l'invention, ledit terminal mobile est apte à transmettre automatiquement, vers ledit serveur d'accès, l'identification dudit terminal mobile et d'au moins une cellule dans laquelle il est situé.

L'utilisateur du terminal mobile n'est pas dérangé par le système. Ledit terminal mobile est équipé d'un moyen de réponse à une demande d'identification permettant la transmission de l'identification dudit terminal mobile sans intervention de l'utilisateur.

Conformément à l'invention, ledit serveur d'accès est relié à une base de données pour accéder à des informations concernant l'utilisateur dudit terminal mobile.

Ladite base de données contient notamment l'autorisation de l'utilisateur pour être localisé. Elle peut également contenir un profil -de l'utilisateur, entre autre ses centres d'intérêts, qui permet de cibler les messages d'informations transmis vers le terminal mobile après la localisation.

Selon l'invention, ledit serveur d'accès est apte à commander un serveur de localisation pour déterminer la position géographique dudit terminal mobile avec une précision supérieure à la dimension d'une cellule.

Après que le terminal mobile soit identifié et après la vérification dans la base de données de son accord pour la localisation ainsi que de la liste de ses préférences, une localisation plus précise aura un intérêt encore plus important pour particulariser les messages d'informations reçus par ledit terminal mobile.

Conformément à l'invention, ledit serveur d'accès comporte des moyens de traitement et de transmission automatique dudit message de localisation.

Le serveur d'accès traite la liste des terminaux mobiles sélectionnés en y incluant, par exemple, la date et l'heure de la localisation desdits terminaux mobiles. Ledit serveur d'accès génère et transmet automatiquement au moins un message de localisation vers le fournisseur du service ayant demandé à être alerté de la présence de terminaux mobiles dans ladite zone géographique déterminée.

La description qui va suivre en regard du dessin annexé, donné à titre d'exemple non limitatif, fera bien comprendre en quoi consiste l'invention, comment elle peut être réalisée et d'autres caractéristiques de l'invention en ressortiront.

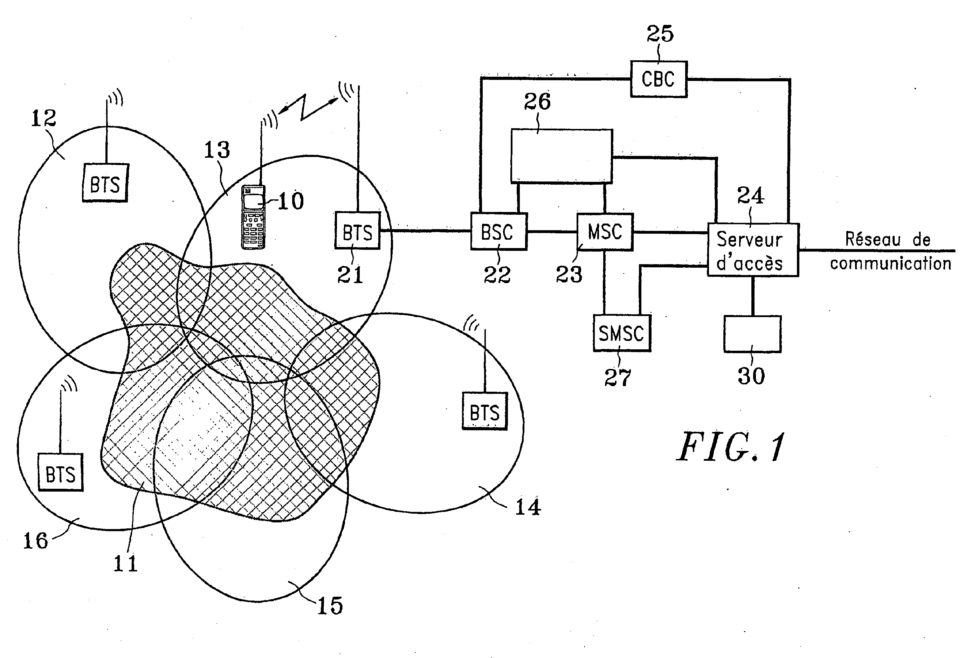

La figure 1 est un schéma de l'architecture générale du système de localisation d'un terminal mobile par rapport à une zone géographique, conforme à l'invention.

Pour faciliter la compréhension, l'invention est décrite avec les appellations utilisées dans la terminologie des réseaux mobiles de type GSM. Toutefois, l'invention s'applique à tous les réseaux mobiles de communication dans lesquels existe un canal de diffusion de messages radio vers les terminaux mobiles desdits réseaux.

Un fournisseur du service souhaite, par exemple, transmettre automatiquement un message vers tous les utilisateurs potentiels dudit service, équipés d'un terminal mobile 10, qui sont proches d'une zone géographique déterminée 11.

Par exemple, un exploitant de grands magasins transmet automatiquement des messages d'informations sur les promotions concernant un centre commercial.

Autre exemple, un exploitant touristique adresse automatiquement des messages d'informations touristiques aux utilisateurs de terminaux mobiles proches d'un monument déterminé.

Dans ce dernier cas, le monument touristique déterminé est la zone géographique 11 à surveiller. Cette zone est identifiée par au moins une cellule 12, 13, 14, 15, 16 qui la recouvre complètement ou en partie.

La liste desdites cellules 12, 13, 14, 15, 16, correspondant à ladite zone géographique déterminée 11, est mise en mémoire dans un serveur 24 d'accès du réseau cellulaire de communication.

L'utilisateur, concerné par ledit service, équipe son terminal mobile 10 d'un moyen de réponse à une demande d'identification. Par exemple, une carte d'identification d'abonné, appelée carte « SIM » (Subscriber Identification Module), est mise en place dans le terminal mobile 10. Ladite carte SIM est alors équipée de manière à permettre le fonctionnement dudit système conforme à l'invention.

Au moment où ledit utilisateur souhaite activer le service, celui-ci met en fonctionnement la réception sur un canal de diffusion de messages radio sur son terminal mobile 10.

Cette manoeuvre peut, par exemple, être réalisée par la numérotation d'un code entré sur le clavier du terminal mobile 10 ou bien par la sélection sur un menu, présent sur l'écran dudit terminal mobile 10.

Dans un réseau cellulaire de communication, ledit canal de diffusion de messages radio est utilisé pour connaître à tout moment la cellule radio dans laquelle la transmission est la meilleure vers un terminal mobile.

Pour connaître la liste des terminaux mobiles 10, présents dans au moins une cellule 12, 13, 14, 15, 16 correspondant à ladite zone géographique 11, le serveur 24 d'accès, qui a en mémoire la liste des cellules à surveiller, demande l'émission d'un message radio diffusé par le serveur 25 de messages diffusés.

Dans un réseau de communication pour les mobiles de type GSM, par exemple, le serveur 25 de messages diffusés est un « CBC », soit Cell Broadcast Center.

Ledit serveur 25 de messages diffusés ou « CBC » émet un message diffusé vers lesdites cellules 12, 13, 14, 15, 16 concernées.

Le terminal mobile 10 de l'utilisateur, qui a sélectionné la réception sur le canal de diffusion de messages radio et qui est situé dans au moins une des cellules 12, 13, 14, 15, 16, reçoit ledit message diffusé.

En réponse, ledit terminal mobile 10 émet un message de présence vers le serveur 24 d'accès. Seuls les terminaux mobiles, situés dans au moins une cellule 12, 13, 14, 15, 16 correspondant à ladite zone géographique 11, vont donc émettre ledit message de présence.

Ledit message de présence peut, par exemple, être transmis vers le serveur 24 d'accès par le service des messages courts, appelé « SMS » (Short Message Service).

Après l'émission dudit message de présence, ledit terminal mobile 10, équipé dudit moyen de réponse à une demande d'identification, transmet automatiquement son identification, ainsi que l'identification d'au moins une cellule 12, 13, 14, 15, 16 dans laquelle il est situé.

Cette transmission se fait sans intervention de l'utilisateur dudit terminal mobile 10 grâce au moyen de réponse à une demande d'identification, en particulier grâce à l'application installée dans ladite carte « SIM », mise en place dans le terminal mobile 10.

Lesdites identifications sont transmises dans le réseau cellulaire de communication à partir de la station de base 21 appelée « BTS » (Base Transceiver Station) d'une borne radio. Elles transitent ensuite par le contrôleur 22 de stations de base appelé « BSC » (Base Station Controller), puis par le centre de commutation 23 du réseau mobile appelé « MSC » (Mobile Switching Center).

Lorsque le message de présence est un message court de type « SMS », celui-ci transite également par le centre 27 des messages courts du réseau mobile, appelé « SMSC » (Short Message Service Center).

Lorsque au moins un terminal mobile 10 est situé dans au moins une cellule 12, 13, 14, 15, 16 correspondant à la zone géographique surveillée 11, le serveur 24 d'accès établit la liste desdits terminaux en question.

De manière à rendre les informations les plus fonctionnelles possibles pour le fournisseur du service, le serveur 24 d'accès peut, par exemple, ajouter la date et l'heure de la localisation dudit terminal mobile 10, proche de ladite zone surveillée 11, donc du monument touristique déterminé.

Selon le paramétrage du serveur 24 d'accès, celui-ci peut également interroger une base 30 de données, de manière à accéder à des informations concernant l'utilisateur du terminal mobile 10, notamment l'autorisation dudit utilisateur pour être localisé.

La base 30 de données peut également contenir un profil de l'utilisateur avec, par exemple, ses goûts ou bien ses intentions d'achat, domaines pour lesquels il souhaite recevoir des messages d'informations.

Ladite base 30 de données peut être implantée ou non dans le serveur 24 d'accès.

L'utilisateur, abonné audit service, peut accéder à ladite base 30 de données, par exemple par l'intermédiaire d'un site web ou bien d'un portail de type internet. De cette façon, celui-ci peut modifier son profil, ses autorisations ou bien ses préférences.

Pour améliorer la précision sur la position géographique du terminal mobile 10, le serveur 24 d'accès peut demander au serveur 26 de localisation l'utilisation de méthodes de triangulation de signaux, combinant les informations de localisation provenant de plusieurs cellules voisines.

Quand elles existent, ces informations supplémentaires apportant une précision sur la localisation supérieure à la dimension de la cellule, sont utilisées par le serveur 24 d'accès pour générer un message de localisation.

A partir de la liste desdits terminaux mobiles localisés et des informations de la base 30 de données, le serveur 24 d'accès transmet automatiquement un message de localisation au fournisseur du service.

Ensuite, le fournisseur du service diffuse automatiquement des messages d'informations touristiques uniquement vers les terminaux mobiles proches dudit monument déterminé.

Chacun desdits terminaux mobiles 10 concernés pourra alors recevoir des messages d'informations particularisés, en fonction de son profil et de ses préférences.

Pour ce faire, lesdits messages d'informations touristiques, reçus sur lesdits terminaux mobiles, peuvent par exemple être transmis par le service des messages courts, appelé « SMS » (Short message Service) par l'intermédiaire du centre 27 des messages courts, appelé « SMSC » (Short Message Service Center).

Lorsque l'utilisateur souhaite temporairement ne pas être dérangé ou bien s'il interrompt son -abonnement pour ne plus recevoir de messages en provenance du fournisseur du service, le terminal mobile 10 permet l'arrêt de la réception sur le canal de diffusion radio.

Ladite manoeuvre peut, par exemple, être réalisée par la numérotation d'un code entré sur le clavier du terminal mobile 10 ou bien par la sélection sur un menu, présent sur l'écran dudit terminal mobile 10.

Dans ce cas, le terminal mobile 10 n'émet pas ledit message de présence vers le serveur 24 d'accès.

## Revendications

1. Système de localisation d'au moins un terminal mobile (10) par rapport à une zone géographique déterminée (11), dans un réseau cellulaire de communication pour des mobiles, **caractérisé en ce que**, au moins un serveur (24) d'accès étant apte à stocker l'identification d'au moins une cellule (12, 13, 14, 15, 16) correspondant à au moins une zone géographique déterminée (11) et à commander l'émission d'au moins un message diffusé uniquement vers lesdites cellules (12, 13, 14, 15, 16), ledit système comprend :
- au moins un terminal mobile (10) équipé pour la réception sur un canal de diffusion de messages radio et équipé d'au moins un moyen de réponse à une demande d'identification,
- ledit serveur (24) d'accès apte à recevoir au moins un message de présence en provenance dudit terminal mobile (10) qui a sélectionné ladite réception sur le canal de diffusion de messages radio et qui est situé dans au moins une desdites cellules (12, 13, 14, 15, 16) correspondant à ladite zone géographique déterminée (11), à reconnaître l'identification dudit terminal mobile (10) qui a émis ledit message de présence et d'au moins une cellule (12, 13, 14, 15, 16) dans laquelle il est situé, à traiter et à transmettre automatiquement au moins un message de localisation dudit terminal mobile (10) qui a émis ledit message de présence vers au moins un fournisseur de services,
- au moins un serveur (25) de messages diffusés apte à émettre un message diffusé vers au moins une cellules (12, 13, 14, 15, 16) correspondant à au moins une zone géographique déterminée (11).

2. Système de localisation d'un terminal mobile (10) selon la revendication 1, **caractérisé en ce que** ledit terminal mobile (10) comporte un moyen d'arrêt de ladite réception sur ledit canal de diffusion de messages radio, pour interrompre la réception d'un message d'informations en provenance dudit fournisseur de services.

3. Système de localisation d'un terminal mobile (10) selon l'une des revendications 1 ou 2, **caractérisé en ce que** ledit terminal mobile (10), équipé d'un moyen de réponse à une demande d'identification, est apte à transmettre automatiquement sans intervention de l'utilisateur dudit terminal mobile (10), vers ledit serveur (24) d'accès, l'identification dudit terminal mobile (10) et d'au moins une cellule (12, 13, 14, 15, 16) dans laquelle il est situé après réception dudit message diffusé.

4. Système de localisation d'un terminal mobile (10) selon l'une quelconque des revendications 1 à 3, **caractérisé en ce que** ledit serveur (24) d'accès est relié à une base (30) de données pour accéder à des informations concernant l'utilisateur dudit terminal mobile (10).

5. Système de localisation d'un terminal mobile (10) selon l'une quelconque des revendications 1 à 4, **caractérisé en ce que** ledit serveur (24) d'accès est apte à commander un serveur (26) de localisation pour déterminer la position géographique dudit terminal mobile (10) avec une précision supérieure à la dimension d'une cellule.

6. Système de localisation d'un terminal mobile (10) selon l'une quelconque des revendications 1 à 5, **caractérisé en ce que** ledit serveur (24) d'accès comporte des moyens de traitement et de transmission automatique dudit message de localisation.

7. Procédé de localisation d'au moins un terminal mobile (10) dans un réseau cellulaire de communication pour des mobiles, **caractérisé en ce que**, au moins un serveur (24) d'accès étant apte à stocker l'identification d'au moins une cellule (12, 13, 14, 15, 16) correspondant à au moins une zone géographique déterminée (11) et à commander l'émission d'au moins un message diffusé uniquement vers lesdites cellules (12, 13, 14, 15, 16), ledit procédé comporte les étapes consistant à :
- équiper ledit terminal mobile (10) d'un moyen de réponse à une demande d'identification,
- sélectionner dans ledit terminal mobile (10) une réception sur un canal de diffusion de messages radio,
- recevoir ledit message diffusé uniquement par ledit terminal mobile (10) qui a sélectionné ladite réception sur ledit canal de diffusion de messages radio et qui est situé dans au moins une desdites cellules (12, 13, 14, 15, 16) correspondant à ladite zone géographique déterminée (11),
- recevoir, dans ledit serveur (24) d'accès, au moins un message de présence en provenance uniquement dudit terminal mobile (10) concerné,
- transmettre automatiquement son identifiant et l'identifiant d'au moins une cellule, dans laquelle il est situé, par ledit terminal mobile (10) concerné,
- recevoir, à travers ledit réseau cellulaire de communication vers ledit serveur (24) d'accès, et reconnaître l'identification dudit terminal mobile (10) qui a émis ledit message de présence et l'identification d'au moins une cellule dans laquelle il est situé,
- générer automatiquement dans ledit serveur (24) d'accès à partir d'au moins lesdites identifications au moins un message de localisation vers au moins un fournisseur de services.

## Claims

1. System for locating at least one mobile terminal (10) with respect to a determined geographical zone (11), in a cellular communication network for mobiles, **characterized in that**, at least one access server (24) being able to store the identification of at least one cell (12, 13, 14, 15, 16) corresponding to at least one determined geographical zone (11) and to order the sending of at least one message broadcast solely to said cells (12, 13, 14, 15, 16), said system comprises:
- at least one mobile terminal (10) equipped for the reception on a channel for broadcasting radio messages and equipped with at least one means for responding to an identification request,
- said access server (24) able to receive at least one presence message originating from said mobile terminal (10) which has selected said reception on the channel for broadcasting radio messages and which is situated in at least one of said cells (12, 13, 14, 15, 16) corresponding to said determined geographical zone (11), to recognize the identification of said mobile terminal (10) which has sent said presence message and of at least one cell (12, 13, 14, 15, 16) in which it is situated, to process and to transmit automatically at least one message for locating said mobile terminal (10) which has sent said presence message to at least one service provider,
- at least one broadcast messages server (25) able to send a message broadcast to at least one cell (12, 13, 14, 15, 16) corresponding to at least one determined geographical zone (11).

2. System for locating a mobile terminal (10) according to Claim 1, **characterized in that** said mobile terminal (10) comprises a means for stopping said reception on said channel for broadcasting radio messages, so as to interrupt the reception of an information message originating from said service provider.

3. System for locating a mobile terminal (10) according to one of Claims 1 or 2, **characterized in that** said mobile terminal (10), equipped with a means for responding to an identification request, is able to automatically transmit without the intervention of the user of said mobile terminal (10), to said access server (24), the identification of said mobile terminal (10) and of at least one cell (12, 13, 14, 15, 16) in which it is situated after reception of said broadcast message.

4. System for locating a mobile terminal (10) according to any one of Claims 1 to 3, **characterized in that** said access server (24) is linked to a database (30) so as to access information relating to the user of said mobile terminal (10).

5. System for locating a mobile terminal (10) according to any one of Claims 1 to 4, **characterized in that** said access server (24) is able to order a location server (26) so as to determine the geographical position of said mobile terminal (10) with a precision greater than the dimension of a cell.

6. System for locating a mobile terminal (10) according to any one of Claims 1 to 5, **characterized in that** said access server (24) comprises means for processing and transmitting said location message automatically.

7. Method for locating at least one mobile terminal (10) in a cellular communication network for mobiles, **characterized in that**, at least one access server (24) being able to store the identification of at least one cell (12, 13, 14, 15, 16) corresponding to at least one determined geographical zone (11) and to order the sending of at least one message broadcast solely to said cells (12, 13, 14, 15, 16), said method comprises the steps consisting in:
- equipping said mobile terminal (10) with a means for responding to an identification request,
- selecting in said mobile terminal (10) a reception on a channel for broadcasting radio messages,
- receiving said message broadcast solely by said mobile terminal (10) which has selected said reception on said channel for broadcasting radio messages and which is situated in at least one of said cells (12, 13, 14, 15, 16) corresponding to said determined geographical zone (11),
- receiving, in said access server (24), at least one presence message originating solely from said mobile terminal (10) concerned,
- automatically transmitting its identifier and the identifier of at least one cell, in which it is situated, by said mobile terminal (10) concerned,
- receiving, through said cellular communication network to said access server (24), and recognizing the identification of said mobile terminal (10) which has sent said presence message and the identification of at least one cell in which it is situated,
- automatically generating in said access server (24) on the basis of at least said identifications at least one location message to at least one service provider.

## Patentansprüche

1. System zur Lokalisierung mindestens eines mobilen Endgeräts (10) bezüglich einer bestimmten geographischen Zone (11) in einem zellularen Kommunikationsnetzwerk für Mobiltelefone, **dadurch gekennzeichnet, dass**, wenn mindestens ein Zugangsserver (24) fähig ist, die Identifikation mindestens einer Zelle (12, 13, 14, 15, 16) entsprechend mindestens einer bestimmten geographischen Zone (11) zu speichern und das Senden mindestens einer nur zu den Zellen (12, 13, 14, 15, 16) ausgestrahlten Mitteilung zu steuern, das System enthält:
- mindestens ein mobiles Endgerät (10), das für den Empfang auf einem Ausstrahlungskanal von Funkmitteilungen ausgerüstet und mit mindestens einer Antworteinrichtung auf eine Identifikationsanforderung ausgestattet ist,
- den Zugangsserver (24), der fähig ist, mindestens eine von dem mobilen Endgerät (10) kommende Anwesenheitsmitteilung zu empfangen, das den Empfang auf dem Ausstrahlungskanal von Funkmitteilungen ausgewählt hat, und das sich in mindestens einer der Zellen (12, 13, 14, 15, 16) befindet, die der bestimmten geographischen Zone (11) entsprechen, die Identifikation des mobilen Endgeräts (10), das die Anwesenheitsmitteilung gesendet hat, und mindestens einer Zelle (12, 13, 14, 15, 16) zu erkennen, in der es sich befindet, mindestens eine Lokalisierungsmitteilung des mobilen Endgeräts (10), das die Anwesenheitsmitteilung gesendet hat, automatisch zu verarbeiten und an mindestens einen Dienstanbieter zu übertragen,
- mindestens einen Server (25) von ausgestrahlten Mitteilungen, der fähig ist, eine Mitteilung zu senden, die an mindestens eine Zelle (12, 13, 14, 15, 16) ausgestrahlt wird, die mindestens einer bestimmten geographischen Zone (11) entspricht.

2. System zur Lokalisierung eines mobilen Endgeräts (10) nach Anspruch 1, **dadurch gekennzeichnet, dass** das mobile Endgerät (10) eine Einrichtung zum Beenden des Empfangs auf dem Ausstrahlungskanal von Funkmitteilungen aufweist, um den Empfang einer vom Dienstanbieter kommenden Informationsmitteilung zu unterbrechen.

3. System zur Lokalisierung eines mobilen Endgeräts (10) nach einem der Ansprüche 1 oder 2, **dadurch gekennzeichnet, dass** das mobile Endgerät (10), das mit einer Einrichtung zur Antwort auf eine Identifikationsanforderung ausgestattet ist, fähig ist, automatisch ohne Eingriff des Benutzers des mobilen Endgeräts (10) die Identifikation des mobilen Endgeräts (10) und mindestens einer Zelle (12, 13, 14, 15, 16) an den Zugangsserver (24) zu übertragen, in der es sich nach Empfang der ausgestrahlten Mitteilung befindet.

4. System zur Lokalisierung eines mobilen Endgeräts (10) nach einem der Ansprüche 1 bis 3, **dadurch gekennzeichnet, dass** der Zugangsserver (24) mit einer Datenbank (30) verbunden ist, um auf den Benutzer des mobilen Endgeräts (10) betreffende Informationen zuzugreifen.

5. System zur Lokalisierung eines mobilen Endgeräts (10) nach einem der Ansprüche 1 bis 4, **dadurch gekennzeichnet, dass** der Zugangsserver (24) fähig ist, einen Lokalisierungsserver (26) zu steuern, um die geographische Position des mobilen Endgeräts (10) mit einer höheren Präzision als die Abmessung einer Zelle zu bestimmen.

6. System zur Lokalisierung eines mobilen Endgeräts (10) nach einem der Ansprüche 1 bis 5, **dadurch gekennzeichnet, dass** der Zugangsserver (24) Einrichtungen zur automatischen Verarbeitung und Übertragung der Lokalisierungsmitteilung aufweist.

7. Verfahren zur Lokalisierung mindestens eines mobilen Endgeräts (10) in einem zellularen Kommunikationsnetzwerk für Mobiltelefone, **dadurch gekennzeichnet, dass**, wenn mindestens ein Zugangsserver (24) fähig ist, die Identifikation mindestens einer Zelle (12, 13, 14, 15, 16) entsprechend mindestens einer bestimmten geographischen Zone (11) zu speichern und das Senden mindestens einer nur zu den Zellen ausgestrahlten Mitteilung (12, 13, 14, 15, 16) zu steuern, das Verfahren die Schritte aufweist, die darin bestehen:
- das mobile Endgerät (10) mit einer Antworteinrichtung auf eine Identifikationsanforderung auszustatten,
- im mobilen Endgerät (10) einen Empfang auf einem Funkmitteilungs-Ausstrahlungskanal auszuwählen,
- die nur von dem mobilen Endgerät (10) ausgestrahlte Mitteilung zu empfangen, das den Empfang auf dem Funkmitteilungs-Ausstrahlungskanal ausgewählt hat und das sich in mindestens einer der Zellen (12, 13, 14, 15, 16) befindet, die der bestimmten geographischen Zone (11) entsprechen,
- im Zugangsserver (24) mindestens eine nur vom betroffenen mobilen Endgerät (10) kommende Anwesenheitsmitteilung zu empfangen,
- automatisch seine Kennung und die Kennung mindestens einer Zelle, in der es sich befindet, vom betroffenen mobilen Endgerät (10) zu übertragen,
- über das zellulare Kommunikationsnetzwerk zum Zugangsserver (24) die Identifikation des mobilen Endgeräts (10), das die Anwesenheitsmitteilung gesendet hat, und die Identifikation mindestens einer Zelle zu empfangen und zu erkennen, in der es sich befindet,
- automatisch im Zugangsserver (24) ausgehend von mindestens den Identifikationen mindestens eine Lokalisierungsmitteilung an mindestens einen Dienstanbieter zu erzeugen.
